# EUROPÄISCHE PATENTSCHRIFT

(11) **EP 0 716 122 B1**
(45) Veröffentlichungstag und Bekanntmachung des Hinweises auf die Patenterteilung: **27.01.1999**
(21) Anmeldenummer: 95118678.2
(22) Anmeldetag: 28.11.1995
(51) Int. Cl.: C08L 25/14, C08L 33/06

(54) **Hochwärmeformbeständige, spannungsrissbeständige Polymethylacrylat-Formmassen**
High temperature deformation, stress-crack resistant polymethyl-methacrylate moulding compositions
Compositions à mouler à base de polyméthacrylate de méthyle résistants à la déformation à haute température et à la fissuration

(30) Priorität: 07.12.1994 DE 4443557
(43) Veröffentlichungstag der Anmeldung: 12.06.1996
(73) Patentinhaber: Röhm GmbH, 64293 Darmstadt (DE)
(72) Erfinder: Rhein, Thomas, Dr., D-55271 Stadecken-Elsheim (DE); Wicker, Michael, Dr., D-64342 Seeheim-Jugenheim (DE); Rüppel, Mona, D-64739 Höchst/Odw (DE); Mohr, Ernst, D-64653 Lorsch (DE); Dietrich, Gerald, 64287 Darmstadt (DE)

(56) Entgegenhaltungen:
- EP-A- 0 113 105
- EP-A- 0 360 128
- US-A- 2 851 448

## Beschreibung

### Gebiet der Erfindung

Die Erfindung betrifft hochwärmeformbeständige, spannungsrißbeständige Polymethacrylat-Formmassen FM bestehend aus einem verträglichen Gemisch aus 1 bis 99 Gew.-Teilen, vorzugsweise aus 5 bis 95 Gew.-Teilen eines Copolymerisats P, zusammengesetzt aus Styrol und/oder α-Methylstyrol, Alkylmethacrylat mit 1 bis 6 Kohlenstoffatomen im Esterrest sowie aus Acryl- und/oder Methacrylsäure mit 1 bis 99 Gew.-Teilen, vorzugsweise aus 95 bis 5 Gew.-Teilen eines Polymethylmethacrylats PM, enthaltend mindestens 80 Gew.-% Methylmethacrylat als Monomereinheiten, wobei die Formmassen FM eine hohe Transparenz aufweisen.

### Stand der Technik

In DE-A 12 31 013 wird ein Verfahren zur Herstellung von Copolymerisaten beschrieben, die aus 1 bis 50 Gew.-% eines α-Alkylstyrols und zu 99 bis 50 Gew.-% aus einem Alkylmethacrylat, gegebenenfalls in untergeordneten Mengen aus weiteren polymerisierbaren Verbindungen, bestehen, wobei am Aufbau dieser Mischpolymerisate 0,1 bis 20 Gew.-% Maleinsäureanhydrid und/oder Methacrylsäure beteiligt sind. Formmassen aus solchen Copolymerisaten weisen bei abwechselnder Einwirkung von heißem und kaltem Wasser eine geringe Neigung zur Rißbildung auf.
DE-A 23 41 123 umfaßt thermoplastische Formmassen bestehend aus 50 bis 99 Gew.-% Styrol oder Alkylmethacrylat mit 1 bis 8 Kohlenstoffatomen im Esterrest sowie aus 1 bis 50 Gew.-% einer α-substituierten Acrylsäure, beispielsweise Methacrylsäure, wobei jedoch mindestens 5 Gew.-% der Säure als Säureanhydrid vorliegen müssen. Die Überführung eines Teils der Carboxylgruppen in Anhydridgruppen wird durch eine thermische Behandlung der Formmasse bei einer Temperatur über dem Vicat-Erweichungspunkt erreicht.
JP-A 83 125 712 beschreibt Formmassen bestehend aus Copolymerisaten aus 50 - 98 Gew.-% Methylmethacrylat, 1 bis 25 Gew.-% Styrol sowie 1 bis 25 Gew.-% Methacrylsäure mit hoher Wärmeformbeständigkeit und hoher Beständigkeit gegen thermischen Abbau.
In EP-A 273 397 werden Substrate für optische Elemente beschrieben, die aus Copolymerisaten aus Methylmethacrylat, aus aromatischen Vinylverbindungen, aus einer ungesättigten Carbonsäure sowie aus Glutarsäureanhydrid-Einheiten bestehen, die eine gute Wärmeformbeständigkeit und eine hohe Transparenz aufweisen.
US-A 2 851 448 beansprucht transparente Terpolymerisate, die durch Kammerpolymerisation von Monomerenmischungen, bestehend aus Vinylaromaten, aus Alkylmethacrylaten sowie aus ungesättigten Carbonsäuren, wie beispielsweise Acryl- oder Methacrylsäure, in bestimmten Zusammensetzungen, erhalten werden.
Von EP-A 264 508 wird ein Prozeß zur Herstellung von Copolymerisaten mit hohen Wärmeformbeständigkeiten beschrieben, der die thermische Nachbehandlung der Copolymerisate aus Vinylmonomeren wie beispielsweise Styrol und Methylmethacrylat und aus Acryl- bzw. Methacrylsäure-Einheiten umfaßt. Bei der thermischen Nachbehandlung entstehen aus den (Meth)acrylsäure-Einheiten cyclische Anhydrid-Einheiten in der Polymerkette.

### Aufgabe und Lösung

Die im Stand der Technik beschriebenen Copolymerisate aus Alkylmethacrylaten, Vinylaromaten und ungesättigten Carbonsäuren sind hochwertige Formmassen, was ihre Hitzeformbeständigkeit und ihre Korrosionsbeständigkeit gegen verschiedene Lösungsmittel betrifft. Daher besteht großes Interesse, solche Copolymerisate mit konventionellen Formmassen zu mischen, um die Eigenschaften solcher Formmassen zu verbessern. Betrachtet man die Polymethylmethacrylat-Formmassen als Mischungspartner, so ist notwendige Voraussetzung für die technische Anwendung solcher Mischungen der Erhalt der hohen Transparenz der Polymethylmethacrylat-Formmasse. Solche Mischungen müssen also thermodynamisch verträglich sein.
Mischungen von Polymerisaten sind in der Regel unverträglich. Trotz einer wachsenden Zahl von Gegenbeispielen, die in den letzten Jahren aufgefunden wurden, werden die Erfahrungen des Fachmanns auch heute noch von folgendem Satz bestimmt: "Miscibility is the exception, immiscibility is the rule" (siehe hierzu: Kirk-Othmer, Encyclopedia of Chemical Technology, 3rd. Ed., Vol. 18, Seite 460, J. Wiley, 1982).
Überraschenderweise wurde nun gefunden, daß Copolymerisate P bestehend aus:
- (p1): 30 bis 70 Gew.-%: Styrol und/oder α-Methylstyrol
- (p2): 29 bis 70 Gew.-%: Alkylmethacrylat mit 1 bis 6 stoffatomen im Esterrest, sowie
- (p3): 1 bis 20 Gew.-%: Acrylsäure und/oder Methacrylsäure,
wobei die Summe aus (p1), (p2) und (p3) 100 Gew.-% ausmacht,
in jedem Gewichtsverhältnis mit Polymethylmethacrylat-Polymerisaten PM, bestehend aus:
- (pm1): 80 bis 100 Gew.-%: Methylmethacrylat sowie
- (pm2): 0 bis 20 Gew.-%: mit Methylmethacrylat copolymerisierbaren Monomeren, vorzugsweise aus der Gruppe Alkylacrylat mit 1 bis 8 Kohlenstoffatomen im Esterrest, Vinylaromaten, Vinylester und/oder Acrylnitril bzw. Methacrylnitril,
thermodynamisch verträglich sind und transparente Formmassen FM bilden.
Vorzugsweise betragen im Copolymerisat P die Anteile an Comonomeren (p1) mindestens 30 und höchstens 55 Gew.-%, an (p2) mindestens 40 und höchstens 65 Gew.-% sowie an (p3) mindestens 2 und höchstens 15 Gew.-%. Besonders vorzugsweise betragen im Copolymerisat P die Anteile an Comonomeren (p1) mindestens 30 und höchstens 50 Gew.-%, an (p2) mindestens 45 und höchstens 60 Gew.-% sowie an (p3) mindestens 3 und höchstens 10 Gew.-%. Die Wärmeformbeständigkeiten der Formmassen FM, gemessen als Vicat-Erweichungstemperaturen VET nach DIN 53 460, liegen im allgemeinen über 100 Grad C, vorzugsweise über 110 Grad C. Die Formmassen FM sind hochtransparent und weisen eine, vom Mischungsverhältnis der Copolymerisate P und PM abhängige, Glasübergangstemperatur Tg auf. Im allgemeinen liegen die mittleren Molekulargewichte Mw (Gewichtsmittel) der Copolymerisate P und PM jeweils zwischen 10⁴ und 5 x 10⁵, vorzugsweise zwischen 3 x 10⁴ und 2,5 x 10⁵ Dalton. (Zur Bestimmung von Molekulargewichten vgl. beispielsweise H.F. Mark et al, Encyclopedia of Polymer Science and Technology, Vol. 10, Seiten 1 bis 19, J. Wiley, New York, 1978).
Die Formmassen sind gleichermaßen gut beständig im Spannungsrißtest gegen monomeres Methylmethacrylat, gegen Benzin, gegen Ethanol-Wasser-Gemische sowie gegen heißes Wasser im Wechsel mit heißer Luft (Heißwasserwechseltest).

### Durchführung der Erfindung

### Die Copolymerisate P und PM

Die Copolymerisate P bestehen aus den Monomereinheiten (p1), (p2) und (p3). Beispielhaft für die Monomeren (p2) seien genannt: Ethylmethacrylat, Propylmethacrylat, iso-Propylmethacrylat, Butylmethacrylat, iso-Butylmethacrylat, Pentylmethacrylat, Hexylmethacrylat, Cyclohexylmethacrylat sowie besonders bevorzugt Methylmethacrylat.
Die Herstellung der Copolymerisate P wird nach bekannten Verfahren zur Polymerisation α,β-ungesättigter Verbindungen, insbesondere durch radikalische Polymerisation, beispielsweise in Substanz, in Lösung oder als Suspensionspolymerisation durchgeführt. Als Polymerisationsinitiatoren können dazu Azoverbindungen, wie beispielsweise Azodiisobutyronitril, Peroxide, wie beispielsweise Dibenzoylperoxid oder Dilauroylperoxid, oder Redoxsysteme dienen, oder die Startradikale können strahlenchemisch erzeugt werden (vgl. hierzu beispielsweise H. Rauch-Puntigam, Th. Völker, "Acryl- und Methacrylverbindungen", Springer-Verlag, Heidelberg, 1967 oder Kirk-Othmer, Encyclopedia of Chemical Technology, Vol. 1, Seiten 386ff, J. Wiley, New York, 1978).

Die Copolymerisate P enthalten 30 bis 70 Gew.-%, vorzugsweise 30 bis 55 Gew.-%, besonders vorzugsweise 30 bis 50 Gew.-% Monomereinheiten (p1), 29 bis 70 Gew.-%, vorzugsweise 40 bis 65 Gew.-%, besonders vorzugsweise 45 bis 60 Gew.-% Monomereinheiten (p2) sowie 1 bis 20 Gew.-%, vorzugsweise 2 bis 15 Gew.-% besonders vorzugsweise 3 bis 10 Gew.-% Monomereinheiten (p3), wobei die Summe der Anteile der Monomereinheiten 100 Gew.-% ausmacht. Die mittleren Molekulargewichte M_{w} der Copolymerisate P liegen im allgemeinen zwischen 10⁴ und 5 x 10⁵ Dalton, vorzugsweise zwischen 3 x 10⁴ und 2,5 x 10⁵ Dalton, entsprechend reduzierten Viskositäten η_{spez}/C, gemessen nach DIN 51 562 in Chloroform, von 10 bis 150 cm³g⁻¹, vorzugsweise 15 bis 100 cm³g⁻¹. Die Einstellung der Molekulargewichte erfolgt durch Polymerisation der Monomeren in Gegenwart von Molekulargewichtsreglern, wie insbesondere in Gegenwart von den dafür bekannten Mercaptanen (vgl. hierzu beispielsweise Houben-Weyl, Methoden der organischen Chemie, Bd. XIV/1, Seite 66, 1961 oder Kirk-Othmer, Encyclopedia of Chemical Technology, Vol. 1, Seiten 296ff, J. Wiley, New York, 1978).
Die Copolymerisate P lassen sich thermoplastisch zu glasklaren farblosen Formkörpern verarbeiten, die Vicat-Erweichungstemperaturen VET nach DIN 53 460 von etwa 100 bis 150 Grad aufweisen.

Für die Herstellung und die mittleren Molekulargewichte der Polymerisate PM gilt das für die Copolymerisate P oben angeführte. Als Comonomerbestandteile (pm2) der Copolymerisate PM seien beispielhaft genannt: Ethylacrylat, Propylacrylat, Butylacrylat, Hexylacrylat, Octylacrylat, α-Methylstyrol, p-Methylstyrol, Vinylacetat, Vinylpropionat sowie bevorzugt Styrol und besonders bevorzugt Methylacrylat.

Wie die Copolymerisate P lassen sich auch die Polymerisate PM thermoplastisch zu glasklaren Formkörpern verarbeiten, die Vicat-Erweichungstemperaturen VET von etwa 100 bis 130 Grad C aufweisen.

### Die Formmassen FM

Die Formmassen FM werden durch Mischen der Copolymerisate P mit den Polymerisaten PM hergestellt, wobei der Mischungsart keine Grenzen gesetzt sind.
Vorzugsweise erzeugt man zunächst mechanische Mischungen der Mischungskomponenten P und PM, wobei vorteilhaft von Feststoffen, wie beispielsweise Granulaten oder Perlpolymerisaten ausgegangen wird, unter Verwendung langsam laufender Aggregate, wie z.B. Trommel-, Rhönrad-, Doppelkammer- oder Pflugscharmischern. Die langsam laufenden Mischaggragate verursachen ein mechanisches Mischen, ohne daß die Phasengrenzen aufgehoben werden (vgl. beispielsweise Ullmanns Enzyklopädie der Technischen Chemie, 4. Aufl., Bd. 2, Seiten 282 bis 311, Verlag Chemie, Weinheim, New York, 1980). Die thermoplastische Aufbereitung erfolgt anschließend durch homogenes Mischen in der Schmelze unter Verwendung von heizbaren Mischaggregaten bei den dafür geeigneten Temperaturen, wie z.B. in Knetern bei 150 bis 300 Grad C oder vorzugsweise in Extrudern, wie beispielsweise Ein- oder Mehrschneckenextrudern bzw. gegebenenfalls in Extrudern mit oszillierender Schnecke und Scherstiften (z.B. im Bussco-Kneter).
In einem weiteren Verfahren kann zur Herstellung der Formmassen FM beispielsweise Polymerisat PM in der Monomerenmischung (p1), (p2) und (p3) aufgelöst werden, wobei das Copolymerisat P in Gegenwart von PM durch Polymerisation hergestellt wird.
Die Charakterisierung der erfindungsgemäßen Polymermischungen als verträgliche Mischungen erfolgt nach den anerkannten Kriterien (vgl. hierzu Kirk-Othmer, loc.cit., Vol. 18, Seiten 457 bis 460; Brandrup, Immergut, Polymer Handbook, 2nd. Ed., Abs: III, Seite 211, Wiley Interscience, New York, 1975).
Bei den verträglichen Polymermischungen (Formmassen) FM beobachtet man einen Brechungsindex und eine einzige Glasübergangstemperatur Tg, die zwischen denen der beiden Mischungskomponenten P und PM liegt. Als weiterer Hinweis auf die Verträglichkeit der Polymermischungen FM wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und aufgrund der unterschiedlichen Brechungsindices der Mischungskomponenten P und PM optisch trübe wird. Dieses Verfahren stellt einen eindeutigen Beweis dafür dar, daß die ursprüngliche Polymermischung aus einer einzigen, im thermodynamischen Gleichgewicht befindlichen homogenen Phase bestand (vgl. z.B. D.R. Paul, Polymer Blends & Mixtures, Seiten 1 bis 3, Martinus Nijhoff Publishers, Dordrecht, Boston, 1985). Experimentell wird dazu der Trübungspunkt T_{Tr} (Trübungstemperatur) bestimmt, beispielsweise auf einer Kofler-Heizbank (vgl. Chem. Ing. Technik, 1950, Seiten 289ff).

### Vorteilhafte Wirkungen

Die erfindungsgemäßen verträglichen Polymermischungen FM gemäß Anspruch 1 können bereits aufgrund ihrer Verträglichkeit das Interesse der Technik beanspruchen. Die Formmassen FM sind gewöhnlich glasklar und hochtransparent. Die Wärmeformbeständigkeit der Polymerisate PM wird durch das Zulegieren der Copolymerisate P im allgemeinen erhöht. Als weiteren wichtigen Vorteil, insbesondere für den Einsatz im Automobilbereich, weisen die Formmassen FM eine hohe Beständigkeit gegen Spannungsrißkorrosion in folgenden Medien auf:
- monomeres Methylmethacrylat, das beispielsweise beim Fügen von Leuchteninnen- und -außenteilen bei Automobil-Heckleuchten während des sogenannten Spiegel-Schweißverfahrens aus den Polymerisaten PM freigesetzt wird,
- Ethanol/Wasser-Gemische, wie sie beispielsweise als Frostschutzmittel in Reinigungsflüssigkeiten für Automobilscheiben eingesetzt werden, sowie
- Kraftstoffe für Verbrennungsmotoren, wie beispielsweise bleifreies Benzin mit hoher Octanzahl.

Die aufgezählten Medien weisen eine große Spannbreite in ihrer Polarität auf. Umso überraschender war der Befund, daß bei den erfindungsgemäßen Formmassen FM die ausgezeichnete Beständigkeit der Polymerisate PM gegen Kraftstoffe in hohem Maße erhalten wird, während die Beständigkeiten der Formmassen FM gegen monomeres Methylmethacrylat sowie gegen Ethanol/Wasser-Gemische gegenüber denjenigen der Polymerisate PM im allgemeinen deutlich erhöht ist.

Auf der anderen Seite weisen Copolymerisate P mit hohen Anteilen an Monomeren (p1) eine im allgemeinen geringere Beständigkeit gegen Otto-Kraftstoffe auf, die durch das Zulegieren der Polymerisate PM im allgemeinen deutlich erhöht wird.
Somit weisen die erfindungsgemäßen Formmassen FM zahlreiche synergistische Kombinationen der Individualeigenschaften der Mischungskomponenten P und PM auf. Weiterhin vorteilhaft ist die Recyclierbarkeit von Bauteilen aus Formmassen FM, die beispielsweise nach Granulation gemeinsam mit granulierten Bauteilen aus Polymerisaten PM zu transparenten, hochwärmeformbeständigen Formmassen verarbeitet werden können, die ihrerseits wiederum als spritzgießbare Formmassen verwendet werden können. Weiterhin vorteilhaft sind die Eigenschaften der erfindungsgemäßen Formmassen FM im sogenannten Heißwasserwechseltest, der die Beanspruchung von Materialien, beispielsweise im sanitären Bereich, durch Wechsel zwischen Wasser- und Luftlagerung simuliert. Damit sind die Formmassen FM auch für den Haushaltsbereich hervorragend geeignet.

Die nachfolgenden Beispiele dienen zur Erläuterung der Erfindung.
1. LCST durch Messung des Trübungspunkts T_{Tr} auf der Kofler-Heizbank (s.o.).
2. Vicat-Erweichungstemperatur VET in Grad C nach DIN 53460.
3. Reduzierte Viskosität η_{spez}/C in Chloroform nach DIN 51562
4. Viskosität der Polymerschmelzen ηₛ nach DIN 54811
5. Glasübergangstemperatur Tg per Differentialthermoanalyse (DSC, s.o.)
6. Mittleres Molekulargewicht M_{w} per Gelpermeationschromatographie (s.o).
7. Spannungsrißbeständigkeit:
   Aus den Formmassen FM werden extrudierte Platten hergestellt, aus denen Probekörper der Maße 230 x 20 x 4 mm herausgearbeitet werden. Die Oberfläche der Probekörper wird mit tensidhaltigem Wasser gereinigt und die Probekörper werden vor dem Prüfvorgang 4 Tage bei 23 Grad C und 50 % r.F. gelagert.
   Prüfvorgang:
   Die gereinigten Probekörper werden mit 20 MPa Biegespannung bei 23 Grad C belastet. Danach wird die Oberfläche der Prüfkörper mit den Prüfmedien, wie beispielsweise Monomere oder Kraftstoffe vollständig benetzt und die Zeit t bis zum Bruch der Probekörper bestimmt.
8. Heißwasserwechseltest:
   Aus den Formmassen FM werden wiederum Probekörper der Maße 230 x 20 x 4 mm per Spritzguß hergestellt. Vor Versuchsbeginn werden die Probekörper mindestens 1 Woche bei 23 Grad C und 50 % r.F. gelagert.
   Ein Wechsel besteht aus:
   1. Eintauchen der Probekörper in VE-Wasser mit einer Anfangstemperatur von 65 Grad C und 8-stündige Lagerung des Probekörpers im VE-Wasser, das während dieses Zeitraums auf Raumtemperatur abkühlt.
   2. Trocknung der Probe über 16 Stunden im Wärmeschrank bei 50 Grad C.
   Es wird die Anzahl der Wechsel bis zum Auftreten der ersten Risse, die visuell senkrecht zur Spritzrichtung ermittelt werden, bestimmt.

### BEISPIELE

### Beispiel 1

### Herstellung des Copolymerisats P1

Einem Monomerengemisch aus 5500 g Methylmethacrylat, 3500 g Styrol und 1000 g Methacrylsäure werden als Polymerisationsinitiatoren 20 g Dilauroylperoxid sowie 5 g 2,2-Bis(tert.-Butylperoxy)butan und als Molekulargewichtsregler 27 g tert-Dodecylmercaptan zugegeben. Diese Lösung wird in einer Polymerisationskammer zunächst über Trockeneis während 15 Minuten durch Anlegen eines Vakuums weitestgehend von Sauerstoff befreit. Danach wird im Wasserbad 2,5 Stunden bei 60 Grad C und 36 Stunden bei 50 Grad C polymerisiert. Zur Endpolymerisation wird die Kammer anschließend im Trockenschrank 12 Stunden bei 120 Grad C getempert.

Das Polymerisat P1 weist folgende Eigenschaften auf:
η_{spez}/C = 72 cm³g⁻¹
M_{w} nach Mark-Houwink aus η_{spez}/C mit PMMA als Eichstandard:
165.000 Dalton
VET: 120 Grad C
Tg: 121 Grad C
Heißwasserwechseltest: 96 Wechsel

Spannungsrißbeständigkeit (bis zum Bruch des Probekörpers):
a) gegen Methylmethacrylat: 799 s
b) gegen Ethanol/Wasser = 75/25: 278 s
c) gegen bleifreies Superbenzin: 158 s

### Beispiele 2 bis 6

Herstellung von Mischungen aus Copolymerisat P1 und Plexiglas ®-Formmasse 8N (Copolymerisat aus 99 Gew.-% Methylmethacrylat und 1 Gew.-% Methylacrylat, M_{w} ≅ 110000 Dalton).

Die Mischungen aus Copolymerisat P1 und Plexiglas ® Formmasse 8N werden durch mechanisches Mischen der Granulate der Einzelkomponenten und nachfolgendes Schmelzmischen in einem Einschnecken-Laborextruder hergestellt. Das Bandextrudat wird als Probekörper für die visuelle Beurteilung der Verträglichkeit sowie für die Bestimmung der Entmischungstemperaturen (T_{Tr}) und der Wärmeformbeständigkeit (Tg, VET) verwandt.

| *Beisp.* | *Mischungsverhältnis P1/8N* | *visuelle Beurteilung der Verträglichkeit* | *T*_{*Tr*} *[°C]* | *Tg [°C]* | *VET [°C]* | *Schmelzeviskosität η*_{*s*} *(220°C/5N) [Pa s]* |
|---|---|---|---|---|---|---|
| *2* | *80/20* | *transparent* | *>260* | *115* | *116,1* | *2 596* |
| *3* | *60/40* | *transparent* | *>260* | *114* | *114,2* | *2 596* |
| *4* | *40/60* | *transparent* | *>260* | *115* | *112,4* | *2 853* |
| *5* | *20/80* | *transparent* | *>260* | *110* | *111,1* | *2 720* |
| *6* | *0/100 (Vergleich)* | *transparent* | -- | -- | *108* | *2 460* |

### Beispiele 7 bis 10:

Charakterisierung von Mischungen aus Copolymerisat P1 und Plexiglas ®-Formmasse 8N hinsichtlich Spannungsrißbeständigkeit und Heißwasserwechseltest.

| *Beisp.* | *Mischungsverhältnis* | *visuelle Beurteilung der Verträglichkeit* | *Wechsel im Heißwasserwechseltest* | *Spannungsrißbeständigkeit (Zeit bis zum Bruch der Probekörper) [s] gegen* | | |
|---|---|---|---|---|---|---|
| | | | | *Methylmethacrylat* | *Ethanol/Wasser = 75/25* | *bleifreies Super-Benzin* |
| *7* | *90/10* | *transparent* | *11** | *430* | *159* | *430* |
| *8* | *75/25* | *transparent* | *18* | *89* | *60* | *215* |
| *9* | *50/50* | *transparent* | *11* | *48* | *15* | *78* |
| *10* | *0/100 (Vergleich)* | *transparent* | *5* | *3* | *8* | *52* |

| | | | | | | |
|---|---|---|---|---|---|---|
| * *wenig kleine Risse, keine Rißneubildung* | | | | | | |

## Patentansprüche

1. Thermoplastische Formmassen FM mit hoher
Transparenz bestehend aus verträglichen Mischungen aus 1 bis 99 Gew.-Teilen eines Copolymerisats P, zusammengesetzt aus:
(p1): 30 bis 70 Gew.-% Styrol und/oder α-Methylstyrol
(p2): 29 bis 70 Gew.-% Alkylmethacrylat mit 1 bis 6 Kohlenstoffatomen im Esterrest, sowie
(p3): 1 bis 20 Gew.-% Acrylsäure und/oder Methacrylsäure,
wobei die Summe aus (p1), (p2) und (p3) 100 Gew.-% ausmacht,
sowie aus
99 bis 1 Gew.-Teilen eines Polymethylmethacrylat-Polymerisats PM, zusammengesetzt aus
(pm1): 80 bis 100 Gew.-% Methylmethacrylat, sowie
(pm2): 0 bis 20 Gew.-% mit Methylmethacrylat copolymerisierbaren Monomeren.

2. Thermoplastische Formmassen FM gemäß Anspruch 1, dadurch gekennzeichnet, daß das Copolymerisat P zusammengesetzt ist aus:
30 bis 55 Gew.-% (p1), 40 bis 65 Gew.-% (p2) sowie 2 bis 15 Gew.-% (p3).

3. Thermoplastische Formmassen FM gemäß den Ansprüchen 1 und 2, dadurch gekennzeichnet, daß das Comonomere (pm2) im Polymerisat PM ausgewählt ist aus der Gruppe Alkylacrylat mit 1 bis 8 Kohlenstoffatomen im Esterrest, Vinylester, Vinylaromat, Acrylnitril und/oder Methacrylnitril.

4. Thermoplastische Formmassen FM gemäß den Ansprüchen 1 bis 3, dadurch gekennzeichnet, daß das Comonomere (p2) im Copolymerisat P Methylmethacrylat ist.

5. Thermoplastische Formmassen FM gemäß den Ansprüchen 1 bis 4, dadurch gekennzeichnet, daß das Comonomere (pm2) in Polymerisat PM Methylacrylat ist.

6. Thermoplastische Formmassen FM gemäß den Ansprüchen 1 bis 5, dadurch gekennzeichnet, daß die mittleren Molekulargewichte M_{w} des Copolymerisats P und des Polymerisats PM zwischen 10⁴ und 5 x 10⁵ Dalton 1,66 · 10⁻²⁰ g bis 1,66 · 10⁻¹⁹ g liegen.

7. Thermoplastische Formmassen FM gemäß den Ansprüchen 1 bis 6, dadurch gekennzeichnet, daß sie aus Mischungen aus 5 bis 95 Gew.-Teilen Copolymerisat P und 95 bis 5 Gew.-Teilen Polymerisat PM bestehen.

8. Verwendung der thermoplastischen Formmassen FM gemäß den Ansprüchen 1 bis 7 zur Herstellung von Formkörpern.

## Claims

1. A thermoplastic moulding compound FM with high transparency, comprising compatible mixtures of 1 to 99 parts by weight of a copolymer P, consisting of:
(p1): 30 - 70 % by weight styrene and/or α-methylstyrene
(p2): 29 - 70 % by weight alkylmethacrylate with 1 to 6 carbon atoms in the ester group, and
(p3): 1 - 20 % by weight acrylic acid and/or methacrylic acid,
wherein the sum of (p1), (p2) and (p3) is 100 % by weight,
and
99 to 1 parts by weight of a polymethyl methacrylate polymer PM, consisting of
(pm1): 80 to 100 % by weight methylmethacrylate, and
(pm2): 0 to 20 % by weight of monomers which are copolymerisable with methylmethacrylate.

2. A thermoplastic moulding compound FM according to claim 1, characterised in that the copolymer P comprises:
30 - 55 % by weight (p1), 40 - 65 % by weight (p2) and 2 - 15 % by weight (p3).

3. A thermoplastic moulding compound FM according to claims 1 and 2, characterised in that the comonomer (pm2) in the polymer PM is selected from the group alkyl acrylates with 1 to 8 carbon atoms in the ester group, vinyl esters, vinyl aromatics, acrylonitrile and/or methacrylonitrile.

4. A thermoplastic moulding compound FM according to claims 1 to 3, characterised in that the comonomer (p2) in the copolymer P is methylmethacrylate.

5. A thermoplastic moulding compound FM according to claims 1 to 4, characterised in that the comonomer (pm2) in the polymer PM is methylacrylate.

6. A thermoplastic moulding compound FM according to claims 1 to 5, characterised in that the average molecular weight M_{w} of the copolymer P and the polymer PM is between 10⁴ and 5 x 10⁵ Daltons, 1.66 x 10⁻²⁰ g to 1.66 x 10⁻¹⁹ g.

7. A thermoplastic moulding compound FM according to claims 1 to 6, characterised in that they comprise mixtures of 5 to 95 parts by weight copolymer P and 95 to 5 parts by weight polymer PM.

8. Use of a thermoplastic moulding compound FM according to claims 1 to 7 for the production of moulded objects.

## Revendications

1. Composition à mouler CM thermoplastique de grande transparence constituée de mélanges compatibles de 1 à 99 parties en poids d'un copolymère P, constitué de :
(p1) : 30 à 70 % en poids de styrène et/ou d'α-méthylstyrène
(p2) : 29 à 70 % en poids de méthacrylate d'alkyle ayant de 1 à 6 atomes de carbone dans le radical ester ainsi que
(p3) 1 à 20 % en poids d'acide acrylique et/ou d'acide méthacrylique,
où la somme de (p1), (p2) et (p3) constitue 100 % en poids,
ainsi que de
99 à 1 partie en poids d'un polymère de polyméthacrylate de méthyle PM, constitué de
(pm1) 80 à 100 % en poids de méthacrylate de méthyle ainsi que
(pm2) 0 à 20 % en poids de monomères copolymérisables avec du méthacrylate de méthyle.

2. Composition à mouler thermoplastique CM selon la revendication 1,
caractérisée en ce que
le copolymère P est constitué de
30 à 55 % en poids de (p1), 40 à 65 % en poids de (p2) ainsi que 2 à 15 % en poids de (p3).

3. Composition à mouler thermoplastique CM selon les revendications 1 et 2,
caractérisées en ce que
le comonomère (pm2) dans le polymère PM est choisi dans le groupe des acrylates d'alkyle ayant de 1 à 8 atomes de carbone dans le radical ester, des esters vinyliques, des corps vinylaromatiques, de l'acrylonitrile et du méthacrylonitrile.

4. Compositions à mouler CM thermoplastiques selon les revendications 1 à 3,
caractérisées en ce que
le comonomère (p2) dans le copolymère P est le méthacrylate de méthyle.

5. Compositions à mouler thermoplastiques CM selon les revendications 1 à 4,
caractérisées en ce que
le comonomère (pm2) dans le polymère PM est l'acrylate de méthyle.

6. Compositions à mouler thermoplastiques CM selon les revendications 1 à 5,
caractérisées en ce que
les poids moléculaires moyens M_{W} du copolymère P et du polymère PM se situent entre 10⁴ et 5 x 10⁵ daltons (1,66 x 10-²⁰ g bis et 1,66 x 10⁻¹⁹ g).

7. Compositions à mouler thermoplastiques CM selon les revendications 1 à 6,
caractérisées en ce qu'
elles sont composées de mélanges de 5 à 95 parties en poids de copolymère P et de 95 à 5 parties en poids de polymère PM.

8. Utilisation des compositions à mouler thermoplastiques CM selon les revendications 1 à 7 pour la fabrication d'articles moulés.
